# FASCICULE DE BREVET EUROPEEN

(11) **EP 0 952 945 B1**
(45) Date de publication et mention de la délivrance du brevet: **04.07.2001**
(21) Numéro de dépôt: 98900482.5
(22) Date de dépôt: 15.01.1998
(51) Int. Cl.: B62D 61/00, B60B 19/14

(54) **BASE MOBILE OMNIDIRECTIONNELLE**
IN JEDER RICHTUNG VERFAHRBARES TRÄGERFAHRZEUG
OMNIDIRECTIONAL MOBILE BASE

(30) Priorité: 17.01.1997 BE 9700058
(43) Date de publication de la demande: 03.11.1999
(73) Titulaire: UNIVERSITE CATHOLIQUE DE LOUVAIN, B-1348 Louvain-la-Neuve (BE)
(72) Inventeur: FERRIERE, Laurent, B-1348 Louvain-la-Neuve (BE); RAUCENT, Benoît, B-1300 Wavre (BE)
(74) Mandataire: Van Malderen, Joelle
(86) Numéro de dépôt international: BE9800004
(87) Numéro de publication internationale: WO9831583

(56) Documents cités:
- FR-A- 2 695 447
- GB-A- 743 997
- US-A- 1 928 412
- US-A- 4 237 990

## Description

### Objet de l'invention

La présente invention concerne une base mobile omnidirectionnelle, c'est-à-dire apte à se déplacer ou à assurer le déplacement d'objets dans toutes les directions grâce à une commande appropriée et à des moyens d'entraînement particuliers, et qui pourrait convenir pour assurer le déplacement d'objets ou pour faciliter le déplacement de personnes éventuellement blessées ou handicapées ou dans le domaine des loisirs, en particulier des autos tamponneuses.

### Arrière-plan technologigue et état de la technique à la base de l'invention

Pour de nombreuses applications, il existe un besoin de bases mobiles omnidirectionnelles et motorisées permettant leur déplacement dans un environnement parfois exigu, de préférence sur un sol préparé et relativement plat, c'est-à-dire de faible pente et avec de petits obstacles du type câbles électriques, joints entreporte, etc.

En outre, de telles bases mobiles peuvent être également utilisées pour assurer le support et le déplacement d'objets dans toutes les directions.

Parmi les domaines d'application, on peut citer le déplacement à distance d'engins d'exploration, l'assistance aux personnes handicapées ou blessées, le nettoyage industriel, le transport d'objets ou de personnes dans des centres de loisirs, des bureaux, des centres de dépôt et de distribution, des laboratoires, des centres médicaux, etc.

Parmi ces applications particulières, les modes de locomotion de type "tous terrains" (sur chenilles ou sur pattes) ne conviennent pas, car ils sont inutilement complexes et coûteux en comparaison des véhicules ou bases mobiles utilisant des roues.

Il est connu par la demande de brevet WO87/06536 une roue sphérique permettant le déplacement de lourdes charges dans n'importe quelle direction. Le grand diamètre de la sphère accroît ses capacités à supporter une charge et à franchir des obstacles. En revanche, cette roue sphérique mobile possède uniquement une fonction de support, n'est pas motorisée, et ne peut donc être utilisée comme telle pour assurer le déplacement d'un véhicule ou pour entraîner des objets supportés en déplacement.

Le brevet américain US-A-3,789,947 décrit un dispositif formant une roue pour un véhicule destiné à se déplacer sur un sol de nature inégale tel que le sol lunaire pour des explorations. La roue proposée comporte des rayons supportant des segments circonférentiels qui, à leur tour, supportent entre les rayons des galets de forme fuselée affectant un contour extérieur de forme approximativement circulaire. Certains galets sont entraînés individuellement, ce qui rend le dispositif et sa commande fort complexes. Par ailleurs, la bande de roulement n'est pas continue du fait des larges interstices laissés entre deux galets successifs qui peuvent occasionner une détérioration du confort de roulement. De telles roues sont désignées sous le nom de "roues à galets simples", qu'elles présentent ou non des galets motorisés sur leur périphérie. Un autre exemple de roue motorisée à galets simples non motorisés est décrit dans la demande de brevet WO86/03132.

Si deux roues du type précité sont montées sur un même axe, les galets étant décalés angulairement l'un par rapport à l'autre, le dispositif assurera un appui continu sur le sol. Ces roues sont désignées sous le nom de "roues à double rangée de galets". Cette possibilité est notamment décrite dans la demande de brevet WO85/04843, où deux sphères tronquées, jumelles mais décalées de 90°, sont placés côte à côte. Elles supportent tour à tour le poids du véhicule selon l'angle de rotation des roues. Par conséquent, la distance entre le centre de la base mobile et le point de contact de la roue sur le sol varie. Cela provoque alors un couple vertical parasite.

Dans le brevet américain US-A-3,746,112, on décrit une roue destinée à un véhicule terrestre autonome, commandée en rotation dans une direction fixe. Ladite roue, désignée sous le nom de "roue Mécanum", comporte une partie centrale montée sur un axe rotatif et une série de galets, libres en rotation, répartis sur sa circonférence de manière telle que l'axe des galets soit positionné en oblique par rapport à l'axe de la partie centrale. La surface extérieure des galets étant courbée, dans le sens longitudinal et vue de face, ladite roue présentera comme les roues à double rangée une circonférence parfaitement fermée. Toutefois, comme toutes les roues précitées, le faible diamètre des galets restreint considérablement les capacités du véhicule à supporter une charge et à franchir de petits obstacles.

Il existe également des "roues omnidirectionnelles" développant une rotation forcée (motorisée) combinée à une rotation libre ou motorisée des galets périphériques. Les roues à galets simples, les roues à double rangée, les roues Mécanum et toutes leurs variantes sont des exemples de roues omnidirectionnelles.

La demande de brevet français FR-2695447 décrit une base mobile selon le préambule de la revendication 1, comprenant une roue sans moyeu constituée d'une sphère maintenue dans le logement d'un châssis par un ou plusieurs étançons, et entraînée en rotation sous l'effet d'un galet. Ce type de roue trouve son application dans le domaine automobile, dans les véhicules telles que les voiturettes à moteur électrique ou thermique, les chariots pour handicapés, des engins de manutention et de levage, dans le domaine des loisirs, pour la confection de nouveaux jouets, etc.

Le brevet américain US-1,928,412 décrit une roue sphérique maintenue dans le logement d'un châssis et entraînée en rotation par une ou plusieurs roues classiques.

Le brevet britannique GB-743996 décrit une ou plusieurs roues entraînées en rotation le long d'un axe fixe et mises en rotations par un entraînement à chenilles.

Le brevet américain US-4,237,990 décrit un véhicule comprenant trois roues omnidirectionnelles disposées selon la configuration d'un triangle équilatéral.

### Buts de l'invention

La présente invention vise à fournir une base mobile qui ne présenterait pas les inconvénients de l'état de la technique, et qui serait en particulier basé sur un principe simple, assurant une mobilité améliorée, un confort pour des objets ou des personnes disposés sur cette base mobile.

Un autre but de la présente invention vise à fournir une base mobile susceptible de franchir aisément des obstacles et apte à porter une charge élevée.

### Eléments caractéristiques de l'invention

La présente invention est relative à une base mobile comprenant un châssis comportant une ou plusieurs roue(s) sphérique(s), chacune étant disposée dans un logement du châssis et maintenue par un ou plusieurs étançon(s), ladite roue sphérique étant entraînée en rotation sur elle-même par une ou plusieurs roue(s) omnidirectionnelle(s) par des moyens d'entraînement appropriés de type mécanique, électrique ou électromagnétique.

On entend par "roue omnidirectionnelle" ou "roue universelle", une roue mobile (qu'elle soit de type sphérique, cylindrique ou autre) permettant des mouvements selon deux directions orthogonales complémentaires dont au moins l'un des deux mouvements est motorisé ou forcé.

On entend par "mouvement motorisé ou forcé d'une roue omnidirectionnelle ou universelle", un mouvement entraîné par un moyen approprié de type mécanique, électrique ou électromagnétique.

Le second mouvement de cette roue est libre ou également forcé par des moyens appropriés de type mécanique, électrique ou électromagnétique.

Avantageusement, ladite roue omnidirectionnelle est choisie parmi le groupe constitué par une roue à galets simples, à double ou triple rangée de galets ou une roue de type "Mécanum".

De préférence, les galets de ladite roue omnidirectionnelle sont également motorisés. Dans ce dernier cas, on disposera de roues omnidirectionnelles, susceptibles de mouvements dans deux directions orthogonales pouvant être toutes deux forcées ou motorisées. Dans le cas où l'on disposera, par exemple, d'une roue à galets simples dont les galets sont non motorisés, on disposera d'une roue omnidirectionnelle permettant des mouvements dans deux directions orthogonales, le premier mouvement étant forcé ou motorisé, le second mouvement étant libre.

Par conséquent, ces roues omnidirectionnelles posséderont deux degrés de mobilité ou plus.

Selon une forme d'exécution préférée de l'invention, le moyen d'entraînement de la roue omnidirectionnelle comporte une pignonerie. Celle-ci reliée à une ou plusieurs roues omnidirectionnelles à double ou triple rangée de galets synchronisées en rotation par le même moyen d'entraînement et placées symétriquement de part et d'autre de la roue sphérique.

Avantageusement, un ou plusieurs des étançons maintenant la roue sphérique dans le logement du châssis comporte une bille porteuse assurant le contact entre le châssis de la base mobile et la roue sphérique.

Selon l'invention, une plate-forme supportant les moyens d'entraînement vient s'articuler sur le châssis de la base mobile et des moyens sont disposés entre le châssis et ladite plate-forme de manière à maintenir une force de contact entre la ou les roue (s) omnidirectionnelle(s) et la roue sphérique.

Selon une première forme d'exécution préférée de l'invention, la base mobile est un véhicule dont la ou les roue(s) sphérique(s) sont susceptibles de se déplacer sur le sol, en particulier une auto tamponneuse.

Selon une autre forme d'exécution préférée de l'invention, la base mobile est fixe et permet le déplacement d'objets entraînés par les roues sphériques.

Dans ces cas, la base peut comporter un nombre non limité de roues sphériques. Ces roues sphériques peuvent avoir uniquement un fonction de support ou peuvent être entraînées en rotation par un ou plusieurs moyen(s) d'entraînement via une ou plusieurs roue(s) omnidirectionnelle(s).

L'invention sera décrite plus en détails à l'appui des figures annexées en se référant à des exemples d'application repris ci-dessous.

### Brève description des figures

- Les figures 1 et 2: représentent de manière schématique le moyen d'entraînement d'une roue sphérique par une roue omnidirectionelle selon l'invention.
- Les figures 3 à 15: représentent des variantes d'exécution de bases mobiles selon l'invention.

### Description d'une forme d'exécution préférée de l'invention

Des repères de référence identiques seront utilisés pour la désignation d'éléments identiques ou similaires.

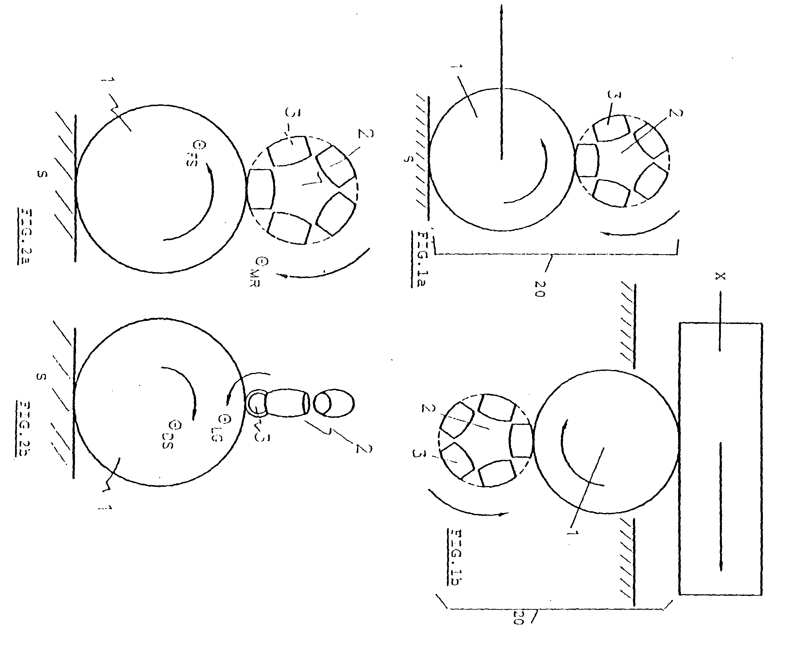

En référence aux figures 1 et 2, la roue sphérique 1 reposant sur le sol (s) ou assurant le déplacement d'un objet (x), est entraînée par une rotation forcée θ_{FS} par la roue omnidirectionnelle à galets simples 2 motorisée par θ_{MR}. Si une rotation dans une autre direction de la roue sphérique θ_{DS} se superposait à la première, occasionnée notamment par les rotations des autres roues sphériques, cette rotation sera reprise par la rotation libre θ_{LG} des galets 3 en contact avec la roue sphérique. On comprend ici qu'une roue conventionnelle ne pourrait pas servir à la motorisation de la roue sphérique, du fait que la rotation globale de la roue sphérique ne se fait pas forcément dans le plan de la roue d'entraînement. L'utilisation d'une telle roue aurait alors occasionné une usure excessive des surfaces en contact et aurait entravé les mouvements de la roue sphérique.

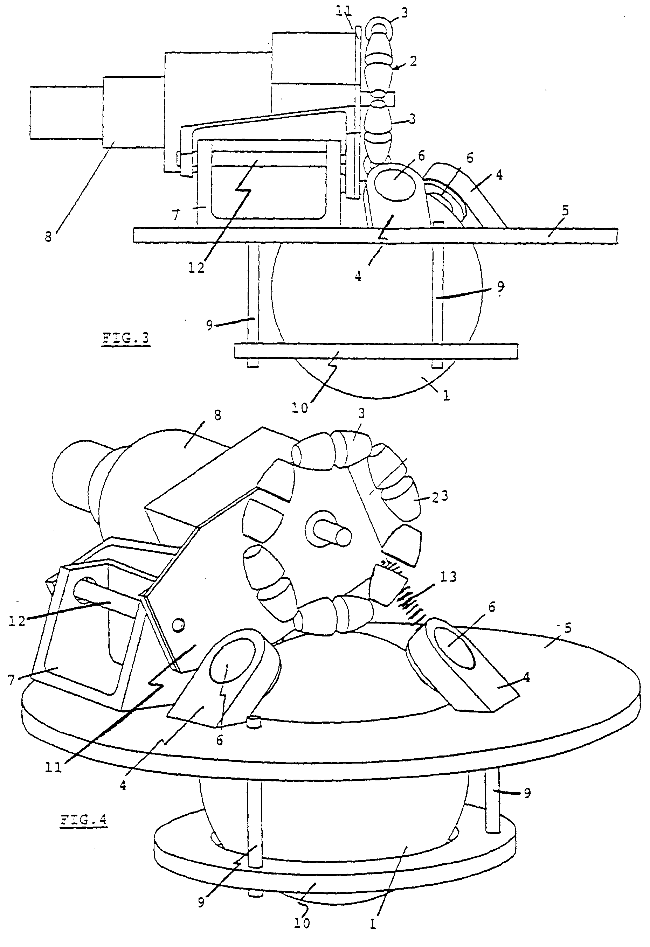

En référence aux figures 3 et 4, une roue sphérique 1 repose sur le sol (s). Deux étançons 4 du châssis 5 abritent chacun une bille porteuse 6 de manière à former la base mobile 20 de l'invention. Ces billes porteuses 6 permettent à la roue sphérique 1 de supporter le poids de la base mobile et de sa charge sans entraver les mouvements de la roue sphérique. Sur le châssis 5 vient s'articuler une plate-forme 7 sur laquelle se fixent des moyens d'entraînement, à savoir un moteur 8 pouvant entraîner une roue à galets simples 2, le moteur 8 étant solidaire de la bride 11 capable de tourner autour de l'axe 12. Dans ce cas, la roue à galets remplit également une fonction de soutien (comme un étançon) pour la base mobile. Dans d'autres configurations, la fonction de soutien et la fonction d'entraînement peuvent être dissociées.

Grâce à des ressorts 13 ou tout autre moyen analogue, placé entre le châssis 5 et la bride 11, une force de contact est maintenue entre la roue omnidirectionnelle 2 et la roue sphérique 1, ce qui permet de réaliser une rotation sans glissement. Si une autre rotation de la roue sphérique 1 survenait, elle serait reprise par la rotation libre des galets 3 en contact. Des étançons 10 liés au palier 9 sécurisent la roue sphérique 1 si la base mobile est soulevée et permet sa libre extraction en cas de démontage. Il est également possible d'envisager un dispositif magnétique permettant de sécuriser la roue sphérique 1 dans son logement et assurer le contact entre la roue omnidirectionnelle 2 et la roue sphérique 1.

Il est également possible de placer des billes porteuses en lieu et place des étançons 10 de manière à augmenter la force de contact entre la roue omnidirectionnelle 2 et la roue sphérique 1.

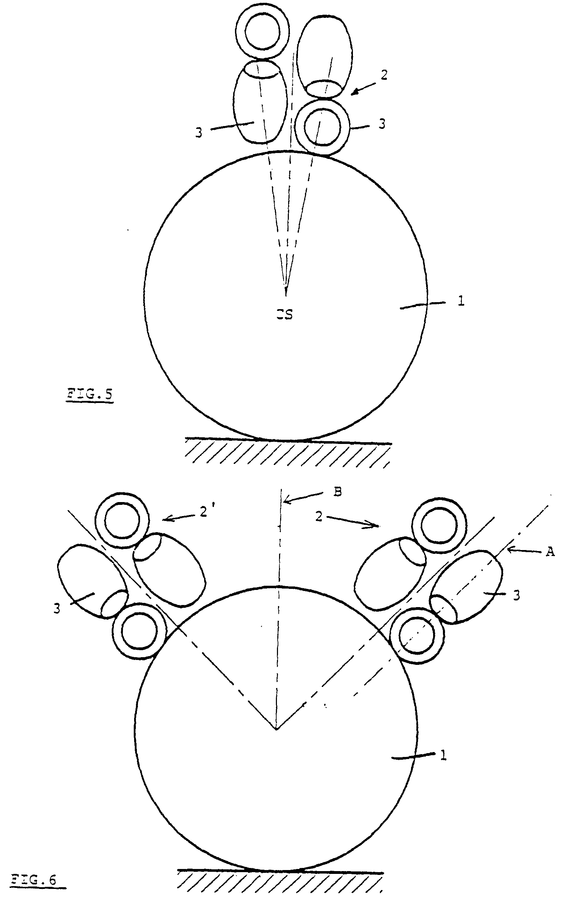

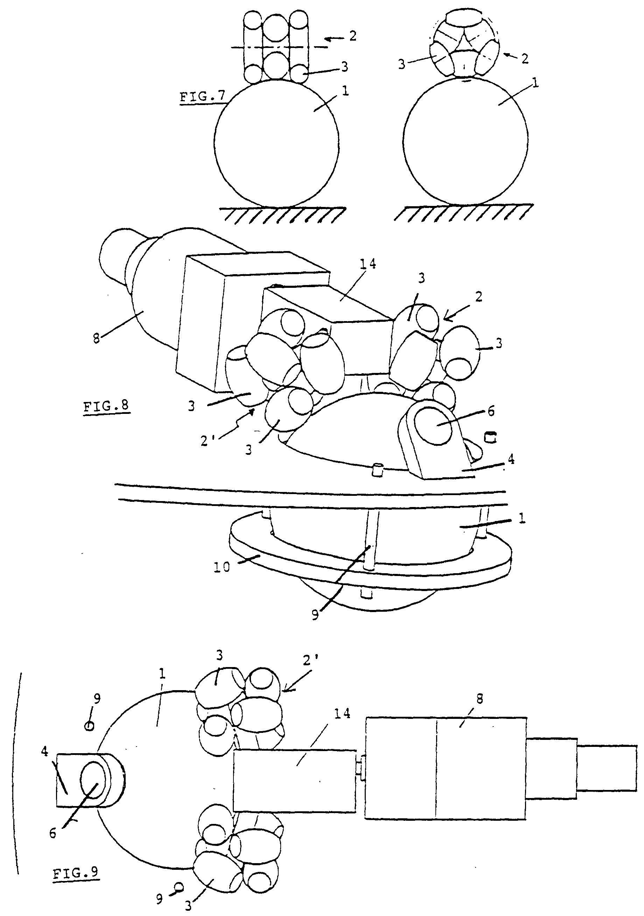

Les figures 5, 6 et 7 illustrent une disposition particulière de l'invention, qui utilise des roues omnidirectionnelles 2 à double ou triple rangée de galets 3. On remarque que le plan A contenant les points de contact des galets 3 sur la roue sphérique 1 ne passe pas par le centre CS. De plus, ce plan de contact change au gré de la rotation de la roue omnidirectionnelle 2 selon le galet 3 en contact. Or, ce plan de contact est aussi un plan de rotation. Comme il est décentré par rapport à la roue sphérique 1, cela entraîne, si la roue omnidirectionnelle 2 est utilisée comme illustré aux figures 1 et 2, des rotations parasites et indésirables de la roue sphérique 1. Le dispositif illustré à la figure 5 rend cependant leur utilisation possible en synchronisant en rotation deux roues omnidirectionnelles 2 identiques placées symétriquement par rapport à un plan vertical B. Les effets parasites du changement de point de contact vont alors s'annuler mutuellement. La synchronisation des rotations des roues omnidirectionnelles 2 est obtenue mécaniquement (pignonerie) ou électroniquement (synchronisation des moteurs d'entraînement). La figure 6 illustre une synchronisation mécanique des roues omnidirectionnelles 2. L'emploi d'une roue omnidirectionnelle à triple rangée de galets permet pour des bases mobiles lourdement chargées de diminuer ou d'éliminer d'éventuels phénomènes de vibrations lorsque la roue est utilisée comme étançon. En effet, la roue sphérique sera toujours en contact avec un ou plusieurs galets (voir figure 7).

En référence aux figures 8 et 9, il est montré une forme d'exécution utilisant des roues à double rangée de galets 3. Dans cette forme d'exécution, la synchronisation des deux roues omnidirectionnelles 2 est obtenue par l'adaptation d'une pignonerie 14. Le moteur 8 entraîne la pignonerie 14 qui entraîne les roues omnidirectionnelles 2 en contact avec la roue sphérique 1. Les autres éléments sont identiques à ceux qu'illustrent les figures 3 et 4, à l'exception de la plate-forme 5, découpée différemment pour accueillir le dispositif.

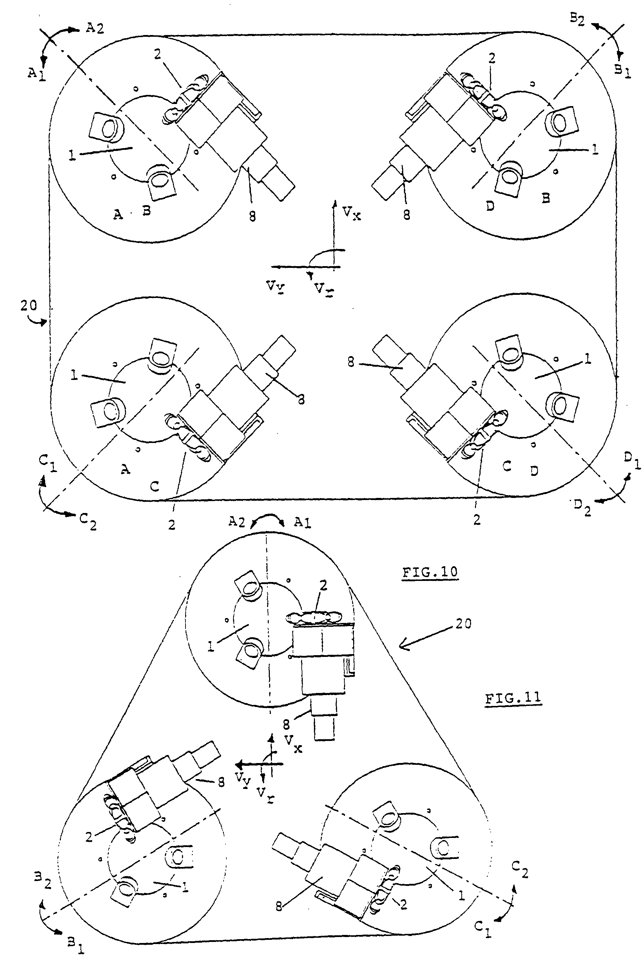

Dans les figures 10 à 15, on a représenté des combinaisons particulières des dispositifs précédemment décrits. La figure 10 montre quatre dispositifs utilisant des roues omnidirectionnelles 2 à galets 3 simples, placés aux sommets d'un rectangle (matérialisé par les quatre lignes reliant le centre des quatre sphères). La rotation simultanée et à même vitesse des quatre roues sphériques dans les sens A2, B2, C1 et D1 va entraîner le véhicule dans la direction Vx. La rotation simultanée et à même vitesse des quatre roues sphériques dans les sens A1, B2, C1 et D2 va entraîner le véhicule dans la direction Vy. La rotation simultanée et à même vitesse des quatre roues sphériques dans les sens A1, B2, C2 et D1 va entraîner le véhicule dans une rotation Vr. Tous ces mouvements peuvent être combinés, ce qui donne à la plate-forme une mobilité totale.

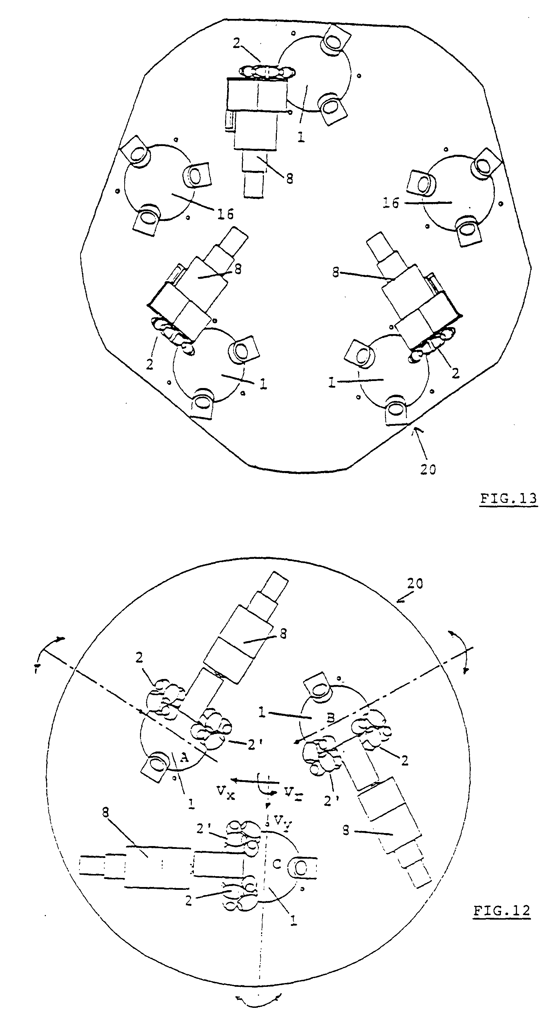

Les figures 11 et 12 montrent un combinaison en triangle des dispositifs de motorisation d'un second type. Le triangle est matérialisé par les trois lignes joignant les roues sphériques. La rotation simultanée et à même vitesse des deux roues sphériques B et C dans les sens B2 et C1 ainsi que la rotation de la roue sphérique A dans le sens A2 à plus faible vitesse va entraîner le véhicule dans la direction Vy. La rotation simultanée et à même vitesse des deux roues sphériques B et C dans les sens B2 et C2 sans aucune rotation de la roue sphérique A va entraîner le véhicule dans la direction Vx. La rotation simultanée et à même vitesse des trois roues sphériques A, B et C dans les sens A2, B1 et C2 va entraîner le véhicule dans la rotation Vr. Tous ces mouvements peuvent être combinés, et à l'instar d'une disposition en rectangle, le véhicule est doté d'une mobilité parfaite.

La figure 13 représente un véhicule particulier tel qu'une chaise, présentant cinq roues sphériques servant soit de points d'appui, soit de roues motorisées.

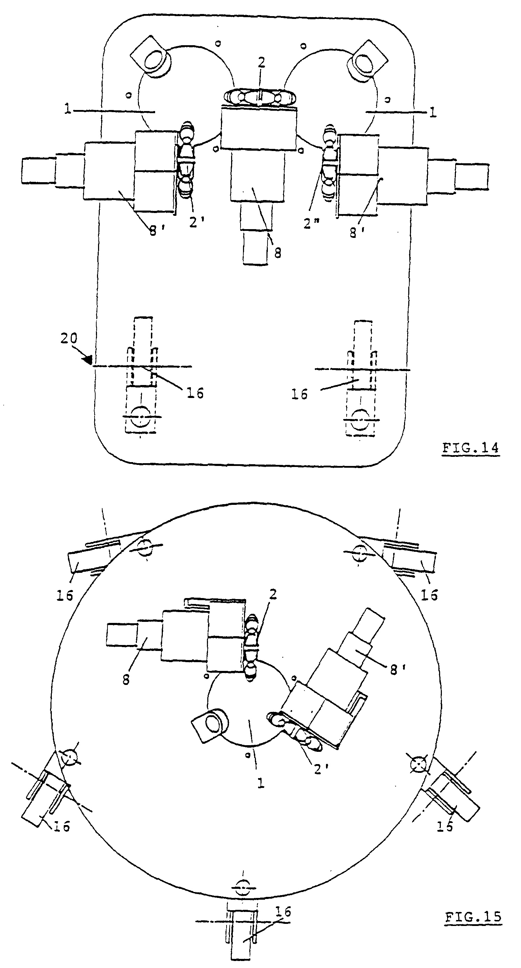

La figure 14 représente un véhicule tel qu'une chaise roulante, équipé de deux roulettes 16 utilisées comme points d'appui mobiles sur le sol et deux roues sphériques 1 entraînées par trois moyens d'entraînement via trois roues omnidirectionnelles 2, 2' et 2". Dans le présent cas, un seul moyen d'entraînement entraîne une seule roue omnidirectionnelle susceptible de provoquer la rotation de deux roues sphériques simultanément.

Comme représenté à la figure 15, il est également possible de concevoir un véhicule comportant une seule roue sphérique 1 mobile entraînée en rotation par deux moyens d'entraînement via deux roues omnidirectionnelles 2 et 2'. Dans le présent cas, la roue sphérique est située au centre de gravité du véhicule, et le véhicule comporte des roues 16, de préférence de type acentrées ("castor wheels"), ayant une fonction d'appui.

La base mobile selon la présente invention peut être utilisée comme véhicule permettant le déplacement d'objets ou de personnes, en particulier de personnes handicapées ou blessées, ou servir elle-même de base sur laquelle des objets peuvent être déplacés de manière omnidirectionnelles dans des conditions optimales de confort.

Le déplacement omnidirectionnel d'objets ou de personnes présente de grands avantages, notamment en raison des facilités d'accostage qu'il permet. Le fait également que les déplacements se fassent sans glissement sur le sol, même en cas de changement de direction, est un atout pour ce qui concerne le travail en salle blanche, en particulier dans le domaine aéronautique. La base mobile de l'invention se rapprocherait des caractéristiques des systèmes à base de coussins d'air, mais avec l'avantage supplémentaire d'une faible consommation énergétique et d'une motorisation possible du déplacement, y compris pour le freinage.

La base mobile de l'invention peut être utilisée pour des applications qui vont du déplacement d'une personne invalide sur une chaise ou un lit jusqu'au transport des fusées en passant par la gamme traditionnelles des chariots élévateurs à fourche ou les autos tamponneuses.

L'omnidirectionalité peut également être un atout pour des applications de type robot mobile devant naviguer dans un environnement comprenant des obstacles pouvant être franchis ou évités. Contrairement à des systèmes à roues classiques, qui ont spontanément tendance à essayer de franchir les obstacles qui se trouvent devant eux même s'ils sont infranchissables, la base omnidirectionnelle aura plutôt tendance à les contourner. Elle présente également des caractéristiques plus performantes en termes de consommation énergétique (pas de dépense superflue d'énergie pour passer un obstacle).

La base mobile peut également être utilisée pour faciliter le déplacement d'objets, en particulier des produits plats dans une étape de découpage, des opérations d'emballage sur convoyeur linéaire, etc.

La base mobile selon l'invention peut évidemment comprendre des dispositifs de commande et de contrôle, embarqués ou non, et éventuellement programmables, qui sont non représentés sur les figures.

Il est bien entendu que la base mobile selon l'invention n'est pas limitée à un nombre de roues sphériques ou omnidirectionnelles particulier ou à un type de roue omnidirectionnelle particulier.

## Revendications

1. Base mobile (20) comprenant un châssis (5) avec une ou plusieurs roue(s) sphérique(s) (1), chacune disposée dans un logement (15) du châssis (5), ladite roue sphérique (1) étant maintenue par un ou plusieurs étançon(s) (4, 10), et entraînée en rotation sur elle-même par des moyens d'entraînement (8), caractérisée en ce que la roue sphérique est entraînée via une ou plusieurs roue (s) omnidirectionnelle(s) (2).

2. Base mobile selon la revendication 1, caractérisée en ce que la roue omnidirectionnelle est choisie parmi le groupe constitué par les roues omnidirectionnelles à galets (3) simples, les roues omnidirectionnelles à double ou triple rangée de galets (3) et les roues omnidirectionnelles comportant une partie centrale montée sur un axe rotatif et une série de galets (3) libres en rotation répartis sur sa circonférence de manière telle que l'axe des galets soit positionné en oblique par rapport à l'axe de la partie centrale, la surface extérieure des galets étant courbée dans le sens longitudinal et vu de face et ladite roue omnidirectionnelle présentant comme les roues à double rangée de galets une circonférence parfaitement fermée, lesdits galets desdites roues omnidirectionnelles étant de préférence motorisés.

3. Base mobile selon la revendication 1 ou 2, caractérisée en ce que le moyen d'entraînement (8) comporte une pignonerie (14) reliée à une paire de roues omnidirectionnelles à double rangée (2, 2') ou triple rangée synchronisées en rotation par le même moyen d'entraînement (8) et placées symétriquement par rapport à un plan passant par le centre de la roue sphérique (1).

4. Base mobile selon l'une quelconque des revendications précédentes, caractérisée en ce qu'elle comporte trois roues sphériques (1) disposées de manière triangulaire aux extrémités du châssis (5), et entraînées en rotation sur elles-mêmes par des moyens d'entraînement (8) identiques ou différents via une ou plusieurs roue(s) omnidirectionnelle(s) (2).

5. Base mobile selon l'une quelconque des revendications 1 à 3, caractérisée en ce qu'elle comporte deux roues sphériques (1) entraînées en rotation sur elles-mêmes par un premier moyen d'entraînement (8) via la même roue omnidirectionnelle (2) et chacune par deux autres moyens d'entraînement (8') via deux autres roues omnidirectionnelles (2', 2").

6. Base mobile selon l'une quelconque des revendications 1 à 3, caractérisée en ce qu'elle comporte une roue sphérique (1) entraînée en rotation sur elle-même par deux moyens d'entraînement (8, 8') via au moins deux roues omnidirectionnelles (2, 2').

7. Base mobile selon l'une quelconque des revendications précédentes, caractérisée en ce qu'elle est un véhicule entraîné en déplacement sur le sol (S).

8. Base mobile selon la revendication 7, caractérisée en ce qu'elle est une auto tamponneuse.

9. Base mobile selon l'une quelconque des revendications 1 à 6, caractérisée en ce qu'elle est un support entraînant en déplacement des objets (X).

10. Utilisation de la base mobile selon l'une quelconque des revendications 7 à 9, pour le déplacement d'objets et/ou de personnes, en particulier des personnes handicapées ou blessées.

## Patentansprüche

1. Verfahrbares Grundelement (20), das ein Chassis (5) mit einem oder mehreren kugelförmigen Rädern (1) aufweist, von denen jedes in einer Aufnahme (15) des Chassis (5) angeordnet ist, wobei das kugelförmige Rad (1) durch ein oder mehrere Stützen (4, 10) zurückgehalten wird und durch Antriebsmittel (8) um sich selbst gedreht wird, dadurch gekennzeichnet, daß das kugelförmige Rad über ein oder mehrere omnidirektionale Räder (2) angetrieben wird.

2. Verfahrbares Grundelement gemäß Anspruch 1, dadurch gekennzeichnet, daß das omnidirektionale Rad in der Gruppe gewählt ist, die gebildet wird von den omnidirektionalen Rädern mit einfachen Reibrollen (3), den omnidirektionalen Rädern mit einer doppelten oder dreifachen Reihe von Reibrollen (3), und den omnidirektionalen Rädern, die eine zentrale Partie umfassen, die auf einer Drehachse angebracht ist, und eine Serie von frei drehbaren Reibrollen (3) umfassen, die auf ihrem Umfang so verteilt sind, daß die Achse der Reibrollen schräg bezüglich der Achse der zentralen Partie angeordnet ist, wobei die äußere Fläche der Reibrollen in der Längsrichtung und von der Vorderseite gesehen gekrümmt ist, und das omnidirektionale Rad wie die Räder mit einer doppelten Reihe von Reibrollen einen vollkommen geschlossenen Umfang aufweist, wobei die Reibrollen der omnidirektionalen Räder vorzugsweise motorisiert sind.

3. Verfahrbares Grundelement gemäß Anspruch 1 oder 2, dadurch gekennzeichnet, daß das Antriebsmittel (8) einen Ritzelantrieb (14) umfaßt, der verbunden ist mit einem Radpaar aus omnidirektionalen Rädern mit einer doppelten Reihe (2, 2') oder einer dreifachen Reihe, die durch dasselbe Antriebsmittel (8) bezüglich der Rotation synchronisiert sind und symmetrisch zu einer durch die Mitte des kugelförmigen Rades (1) gehenden Ebene angeordnet sind.

4. Verfahrbares Grundelement gemäß irgendeinem der vorhergehenden Ansprüche, dadurch gekennzeichnet, daß es drei kugelförmige Räder (1) umfaßt, die dreieckförmig an den Enden des Chassis (5) angeordnet sind, und durch identische oder verschiedene Antriebsmittel (8) über ein oder mehrere omnidirektionale Räder (2) um sich selbst gedreht werden.

5. Verfahrbares Grundelement gemäß irgendeinem der Ansprüche 1 bis 3, dadurch gekennzeichnet, daß es zwei kugelförmige Räder (1) umfaßt, die durch ein erstes Antriebsmittel (8) über dasselbe omnidirektionale Rad (2) um sich selbst gedreht werden, und von denen jedes Rad durch zwei weitere Antriebsmittel (8') über zwei weitere omnidirektionale Räder (2', 2'') um sich selbst gedreht wird.

6. Verfahrbares Grundelement gemäß irgendeinem der Ansprüche 1 bis 3, dadurch gekennzeichnet, daß es ein kugelförmiges Rad (1) umfaßt, das durch zwei Antriebsmittel (8, 8') über mindestens zwei omnidirektionale Räder (2, 2') um sich selbst gedreht wird.

7. Verfahrbares Grundelement gemäß irgendeinem der vorhergehenden Ansprüche, dadurch gekennzeichnet, daß es ein Fahrzeug ist, das auf dem Boden (S) verfahren wird.

8. Verfahrbares Trägerfahrzeug gemäß Anspruch 7, dadurch gekennzeichnet, daß es ein Autoskooter ist.

9. Verfahrbares Grundelement gemäß irgendeinem der Ansprüche 1 bis 6, dadurch gekennzeichnet, daß es ein Untergestell ist, das Gegenstände (X) verschiebt.

10. Verwendung des verfahrbaren Grundelement gemäß irgendeinem der Ansprüche 7 bis 9 zur Verschiebung von Gegenständen und/oder Personen, insbesondere behinderten oder verletzten Personen.

## Claims

1. Mobile base (20), comprising a chassis (5) with one or more spherical wheels (1), each one arranged in a housing (15) of the chassis (5), the said spherical wheel (1) being held by one or more struts (4, 10) and being driven in rotation on itself by drive means (8), characterised in that the spherical wheel is driven via one or more omnidirectional wheels (2).

2. Mobile base according to Claim 1, characterised in that the omnidirectional wheel is chosen from among the group consisting of single-roller omnidirectional wheels (3), double- or triple-row roller omnidirectional wheels (3) and omnidirectional wheels comprising a central part mounted on a rotating shaft and a series of rollers (3), free in rotation, distributed over its circumference in such a way that the axis of the rollers is positioned obliquely with respect to the axis of the central part, with the outer surface of the rollers being curved in the longitudinal direction and seen face on and the said wheel, like the double-row wheels, exhibiting a perfectly closed circumference, said rollers of said omnidirectional wheels being preferably motorised.

3. Mobile base according to Claim 1 or 2, characterised in that the drive means (8) includes a gear arrangement (14) linked to a pair of double-row (2, 2') or triple-row omnidirectional roller wheels synchronised in rotation by the same drive means (8) and placed symmetrically with reference to a plane passing through the centre of the spherical wheel (1).

4. Mobile base according to any one of the preceding claims, characterised in that it includes three spherical wheels (1) arranged in a triangular way at the extremities of the chassis (5), and driven in rotation on themselves by identical or different drive means (8) via one or more omnidirectional wheels (2).

5. Mobile base according to any one of the Claims 1 to 3, characterised in that it includes two spherical wheels (1) driven in rotation on themselves by a first drive means (8) via the same omnidirectional wheel (2) and each one by two other drive means (8') via two other omnidirectional wheels (2', 2'').

6. Mobile base according to any one of the Claims 1 to 3, characterised in that it includes a spherical wheel (1) driven in rotation on itself by two drive means (8, 8') via at least two omnidirectional wheels (2, 2').

7. Mobile base according to any one of the preceding claims, characterised in that it is a vehicle driven in movement on the ground (S).

8. Mobile base according to Claim 7, characterised in that it is a buffer car.

9. Mobile base according to any one of the Claims 1 to 6, characterised in that it is a support carrying along objects (X) in motion.

10. Use of the mobile base according to any one of the Claims 7 to 9, for shifting objects and/or persons, in particular handicapped or injured persons.
